# FASCICULE DE BREVET EUROPEEN

(11) **EP 0 712 815 B1**
(45) Date de publication et mention de la délivrance du brevet: **24.06.1998**
(21) Numéro de dépôt: 95402612.6
(22) Date de dépôt: 21.11.1995
(51) Int. Cl.: C03C 17/23, C03C 17/34

(54) **Vitrage muni d'au moins une couche mince et son procédé d'obtention**
Glasscheibe mit einer dünnen Beschichtung und Verfahren zu ihrer Ausbildung
Glazing provided with a thin coating and process for making it

(30) Priorité: 21.11.1994 FR 9413911
(43) Date de publication de la demande: 22.05.1996
(73) Titulaire: SAINT-GOBAIN VITRAGE, 92400 Courbevoie (FR)
(72) Inventeur: Zagdoun, Georges, F-92250 La Garenne Colombes (FR); Victor, Corinne, F-95320 Saint-Leu La Forêt (FR)
(74) Mandataire: Breton, Jean-Claude

(56) Documents cités:
- EP-A- 0 492 785
- EP-A- 0 526 966
- DE-A- 3 434 583
- DE-A- 4 218 657

## Description

L'invention a trait à un produit comprenant un substrat transparent, du type substrat verrier, que l'on munit d'au moins une couche mince, en vue de fabriquer des vitrages dits fonctionnels aussi bien pour les bâtiments que pour les véhicules.

Dans le contexte de l'invention, on comprend par vitrage fonctionnel un vitrage dont au moins un de ses substrats transparents constitutifs est recouvert d'un empilement de couches minces, afin de lui conférer des propriétés particulières, notamment thermiques, optiques ou électriques.

Il existe ainsi des couches minces appelées bas-émissives, notamment composées d'oxyde métallique dopé, par exemple d'oxyde d'étain dopé au fluor (SnO₂:F) ou d'oxyde d'indium dopé à l'étain (ITO), et que l'on peut déposer sur du verre par des techniques de pyrolyse. Une fois revêtu d'une couche basse-émissive, le substrat monté en vitrage notamment dans un bâtiment permet de réduire l'émission dans l'infrarouge lointain de l'intérieur vers l'extérieur de la pièce ou de l'habitacle à travers ledit vitrage. En diminuant ainsi les pertes énergétiques dues en partie à cette fuite de rayonnement, on améliore sensiblement le confort, notamment en hiver.

On peut monter le substrat recouvert en double-vitrage, la couche bas-émissive étant tournée du côté de la lame de gaz espaçant les deux substrats, notamment disposée en face 3 (on numérote les faces d'un vitrage multiple, conventionnellement, en commençant par la face la plus extérieure par rapport à la pièce ou l'habitacle). Le double-vitrage ainsi constitué présente alors une isolation thermique renforcée, avec un coefficient d'échange thermique K faible, tout en conservant le bénéfice des apports d'énergie solaire, avec un facteur solaire (soit le rapport entre l'énergie totale entrant dans le local et l'énergie solaire incidente) élevé. On pourra se reporter notamment aux demandes de brevet EP-0 544 577, FR-2 704 543 et EP-0 500 445 à ce sujet.

Ces couches bas-émissives sont également de bons conducteurs électriques, ce qui permet d'en équiper les vitrages pour l'automobile afin d'en faire des vitrages chauffants/dégivrants en prévoyant les amenées de courant adhoc, application notamment décrite dans le brevet EP-0 353 140.

Il existe également des couches minces filtrantes appelées aussi sélectives ou anti-solaires et qui, déposées sur des substrats montés en vitrage, permettent de réduire l'apport thermique du rayonnement solaire à travers le vitrage dans la pièce ou l'habitacle, par absorption/réflexion. Il peut s'agir, par exemple, de couches en nitrure (ou oxynitrure) de titane TiN, telles que celles obtenues par pyrolyse en phase gazeuse et décrites dans les demandes de brevet européen EP-0 638 527 et EP-0 650 938.

On peut également mentionner les empilements de couches anti-reflets, constitués usuellement d'une alternance de couches de diélectrique à haut et bas indices de réfraction, plus particulièrement dans le cas de substrats utilisés en tant qu'écrans ou vitrines.

L'invention s'intéresse également aux techniques de dépôt de ces diverses couches, et plus particulièrement à celles ayant recours à une réaction de pyrolyse : ces dernières consistent à projeter des 〈〈 précurseurs 〉〉, par exemple de nature organo-métallique, soit sous forme gazeuse, soit sous forme pulvérulente, soit encore en solution dans un liquide, à la surface du substrat porté à haute température. Lesdits précurseurs, à son contact, s'y décomposent en laissant une couche d'oxyde, d'oxynitrure, d'oxycarbure ou de nitrure. L'avantage de la pyrolyse réside dans le fait qu'elle permet d'envisager le dépôt des couches directement sur le ruban de verre d'une ligne de fabrication de verre plat du type float, en continu, et également dans le fait que les couches pyrolysées présentent (en général) une forte adhérence au substrat.

Les couches bas-émissives ou filtrantes précédemment mentionnées font fréquemment partie d'un empilement de couches, et se trouvent, au moins sur l'une de leurs faces, en contact avec une autre couche, en général en matériau diélectrique à rôle optique et/ou protecteur.

Ainsi, dans les demandes de brevet précitées EP-0 544 577 et FR-2 704 543, la couche bas-émissive, par exemple en SnO₂:F, est entourée de deux couches de diélectrique du type SiO₂, SiOC ou oxyde métallique, couches d'indice de réfraction et d'épaisseur sélectionnés afin d'ajuster l'aspect optique du substrat, notamment en réflexion, par exemple sa couleur.

Dans la demande de brevet EP-0 500 445 également précitée, la couche bas-émissive, notamment en ITO, est surmontée d'une couche d'oxyde d'aluminium afin de la protéger de l'oxydation, et ainsi, dans certaines conditions, supprimer la nécessité de lui faire subir un recuit réducteur et/ou autoriser le bombage ou la trempe du substrat une fois revêtu sans détériorer ses propriétés.

La couche de TiO₂ ou la double couche TiO₂/SiOC qui surmonte la couche filtrante de TiN dans la demande de brevet EP-0 650 938 a également pour rôle de protéger le TiN de l'oxydation, et d'améliorer sa durabilité en général.

Or, il est important de pouvoir s'assurer de l'intégrité des empilements de couches minces, et tout particulièrement de leur capacité à résister à des agressions de nature chimique. En effet, il arrive fréquemment que le substrat transparent, une fois revêtu de couches, soit stocké pendant une période assez longue avant d'être monté en vitrage. S'il n'est pas soigneusement emballé de manière étanche donc coûteuse, les couches dont il est revêtu peuvent se trouver exposées directement à une atmosphère polluée ou soumises à un nettoyage par des détergents peu adaptés pour les dépoussiérer, même si les substrats sont ultérieurement assemblés en double-vitrage ou en vitrage feuilleté, avec les couches minces disposées en faces 2 ou 3, donc protégées. Par ailleurs, outre ce problème de stockage, des empilements susceptibles de corrosion chimique sont un frein à une utilisation des substrats en tant que vitrages 〈〈 monolithiques 〉〉, ou à une disposition des couches en faces 1 ou 4 dans le cas de vitrages multiples, c'est-à-dire des configurations où les couches sont à longueur d'année exposées à l'atmosphère ambiante.

On est donc toujours à la recherche d'empilements de couches à durabilité, notamment chimique, améliorée. Comme précédemment évoqué, il existe déjà des surcouches en matériau diélectrique exerçant une certaine protection des couches sous-jacentes dans l'empilement. Mais aucune d'elles ne présente une durabilité chimique suffisamment élevée pour rester intègre face à une corrosion chimique intense ou de longue durée et/ou pour protéger totalement les couches sous-jacentes éventuellement plus 〈〈 fragiles 〉〉.

Le but de l'invention consiste alors à mettre au point une nouvelle couche mince présentant intrinsèquement une durabilité chimique meilleure, et susceptible de faire partie d'un empilement de couches minces afin d'y jouer un rôle notamment optique et, si nécessaire, un rôle de protection vis-à-vis de la corrosion de l'empilement de couches minces dans lequel elle se trouve incorporée.

L'invention a pour objet un produit comprenant un substrat transparent du type substrat verrier recouvert d'au moins une couche mince à base d'oxyde comprenant du silicium et de l'oxygène, mais également de l'aluminium et au moins un troisième élément noté M destiné à faciliter la formation d'une structure d'oxyde mixte homogène en silicium et en aluminium. Il s'est en effet révélé important d'ajouter cet additif M, qui peut rester très minoritaire par rapport aux autres constituants de la couche, mais qui est cependant très utile pour assurer une bonne répartition du silicium et de l'aluminium dans toute l'épaisseur de la couche, et ceci tout particulièrement si l'on envisage un dépôt par une technique de pyrolyse, comme on le verra ci-après.

De préférence, on choisit comme élément M un halogène, avantageusement du fluor qui est apparu très efficace dans sa fonction 〈〈 d'homogénéisation 〉〉 de la composition de la couche finale.

La couche peut également comprendre d'autres éléments M', notamment du carbone en faible quantité.

La formulation chimique de la couche peut être mise sous la forme SiAlₓO_{y}M_{z} M'ᵤ, avec M de préférence représentant du fluor et M' de préférence représentant du carbone. Les proportions préférées de ces différents éléments selon l'invention sont les suivantes :

| | | |
|---|---|---|
| x (Al) : | de 0,06 à 0,74 | de préférence de 0,14 à 0,33 |
| y (O) : | de 2,1 à 3,1 | de préférence de 2,3 à 2,5 |
| z (M) : | de 0,02 à 0,15 | de préférence de 0,04 à 0,08 |
| u (M') : | de 0 à 0,15 | de préférence de 0,03 à 0,04 |

De manière surprenante, ce type de couche mince s'est révélé très durable à tous les points de vue, et tout particulièrement très résistant à la corrosion chimique. Cette résistance était en effet inattendue au vu de celles que présentent des couches minces en oxyde de silicium SiO₂ ou en alumine Al₂O₃, et on peut l'attribuer à un effet de combinaison synergique dans les divers éléments que comprend l'oxyde mixte de l'invention.

On peut régler à volonté l'épaisseur géométrique de la couche, notamment entre 30 et 180 nanomètres par exemple entre 60 et 160 nanomètres, de préférence entre 80 et 140 nanomètres. De même, en modulant les proportions entre Si, Al, O, M et optionnellement M' de manière adéquate, on peut régler l'indice de réfraction de la couche, par exemple entre 1,42 et 1,60, de préférence entre 1,44 et 1,46. Tout dépend du type d'empilements dont elle fera partie.

Les gammes d'épaisseurs et d'indices rendent la couche tout-à-fait apte à faire partie d'un empilement de couches minces dont au moins une couche est dite fonctionnelle et présente des propriétés thermiques (filtrante, sélective, anti-solaire, bas-émissive) ou électriques. On peut citer par exemple les couches fonctionnelles d'oxyde métallique dopé, ou de nitrure ou d'oxynitrure métallique, et notamment de l'oxyde d'étain dopé au fluor SnO₂:F, de l'oxyde d'indium dopé à l'étain ITO ou du nitrure de titane TiN. On peut aussi utiliser de l'oxyde de zinc dopé, notamment dopé à l'indium ZnO:In, au fluor ZnO:F, à l'aluminium ZnO:Al ou à l'étain ZnO:Sn.

La couche selon l'invention trouve aussi avantageusement sa place dans des empilements dits anti-réfléchissants comportant une alternance d'oxydes (ou autre matériau diélectrique) à haut et bas indices de réfraction.

Des empilements de ce type sont décrits dans les brevets précités, auxquels on se rapportera pour plus de détails.

Avantageusement, on dispose la couche selon l'invention de manière à ce qu'elle soit la dernière de l'empilement : avec son indice de réfraction qui peut être relativement peu élevé, elle peut en effet jouer un rôle optique avantageux, notamment en contribuant à améliorer ou adapter l'aspect en réflexion du vitrage. Mais en plus, grâce à sa durabilité exceptionnelle, elle va pouvoir résister aux détériorations et pouvoir ainsi éventuellement protéger le reste de l'empilement, notamment de l'oxydation à haute température et des attaques chimiques. En effet, par sa capacité à rester intègre face à des attaques corrosives diverses, elle va non seulement résister elle-même, mais encore pouvoir constituer, le cas échéant, une protection vis-à-vis du reste de l'empilement.

Cependant, l'invention ne se limite pas à cette seule configuration : ainsi, il a été constaté que la couche selon l'invention pouvait efficacement jouer le rôle de barrière à la diffusion des ions alcalins du type K⁺ ou Na⁺. On peut alors, au contraire, disposer la couche selon l'invention de manière à ce qu'elle soit la première de l'empilement, déposée directement sur le substrat verrier, afin de faire écran aux alcalins dans le cas où le reste de l'empilement contient des couches suceptibles de détérioration à leur contact. Dans cette configuration, elle peut aussi jouer le rôle de couche 〈〈 d'accrochage 〉〉 vis-à-vis du reste de l'empilement. Ainsi, ses caractéristiques, et notamment sa dureté, lui permettent également de jouer le rôle de sous-couche minérale sous une couche à propriétés hydrophobe/oléophobe, comme déjà décrit dans la demande de brevet FR-94/08734 déposée le 13 juillet 1994 correspondant à la demande européenne EP-95/401671.3 du 12 juillet 1995 et à la demande américaine 08/501 577 du 12 juillet 1995. Cette demande de brevet concerne en effet un empilement bi-couche, comprenant une sous-couche minérale 〈〈 dure 〉〉 sur laquelle est déposée une couche hydrophobe/olophobe obtenue à l'aide d'un alkylsilane fluoré hydrolysable, notamment un perfluoroalkylsilane de formule :

CF₃-(CF₂)ₙ-(CH₂)ₘ-SiX₃

avec 〈〈 n 〉〉 compris entre 0 et 12, 〈〈 m 〉〉 compris entre 2 et 5 et 〈〈 X 〉〉 étant un groupe hydrolysable.

L'invention a également pour objet le procédé d'obtention du produit précédemment défini, qui consiste avantageusement à déposer la couche mince en question par une technique de pyrolyse en phase gazeuse. On utilise comme composés de départ au moins deux précurseurs, dont un précurseur de silicium et un précurseur d'aluminium, et on module leurs proportions relatives et la température de dépôt afin de pouvoir ajuster la formulation chimique et/ou l'indice de réfraction de la couche ainsi obtenue. En effet, sans parler encore du troisième élément M, en fonction de la quantité de silicium et la quantité d'aluminium dans la couche, on peut se rapprocher de l'indice de réfraction de la silice ou au contraire de celui de l'alumine.

La présence du troisième élément M, du fluor de préférence comme déjà mentionné, a trouvé son utilité notamment par le choix d'un dépôt par pyrolyse. En effet, on s'est aperçu, de manière assez inexplicable, que tenter de 〈〈 co-déposer 〉〉 de l'oxyde d'aluminium et de l'oxyde de silicium à partir de leurs 〈〈 précurseurs 〉〉 respectifs est malaisé, et ceci surtout quand les précurseurs sont de nature organo-métallique et/ou organo-silicié. On se trouve en effet confronté à un problème de manque d'homogénéité dans la couche, avec une tendance à obtenir non pas une couche homogène mais deux couches superposées, l'une plus riche en SiO₂, l'autre en Al₂O₃. Comme le but de l'invention n'est pas a priori l'obtention d'une couche à gradient de composition, il a été découvert que l'ajout d'un additif du type fluor avait une influence très bénéfique en facilitant grandement, de manière inattendue, la co-déposition du silicium et de l'aluminium, et permettait d'obtenir une couche d'oxyde mixte d'indice de réfraction et de composition chimique constants dans l'épaisseur de la couche. L'additif M permet, subsidiairement, d'augmenter la vitesse de dépôt de la couche.

Cependant, il serait trop limitatif de lier l'utilisation de cet additif à un dépôt de couche par pyrolyse. Il est en effet vraisemblable que sa présence dans la couche finale, quel que soit son mode d'obtention, contribue à lui conférer ses propriétés de durabilité.

Dans le contexte d'un dépôt de couche par pyrolyse en phase gazeuse, on préfère choisir en tant que précurseur de silicium un précurseur organo-silicié, ou un mélange de précurseurs organo-siliciés choisi(s) dans le groupe suivant : le tétraéthylorthosilicate, appelé TEOS et de formule Si (OC₂H₅)₄, l'héxaméthyldisilane appelé HMDS et de formule (CH₃)₃ Si-Si-(CH₃)₃, l'héxaméthyldisiloxane appelé HMDSO et de formule (CH₃)₃Si-O-Si-(CH₃)₃, l'octaméthylcyclotétrasiloxane appelé OMCTS et de formule ((CH₃)₂ SiO)₄, le tétraméthylcydotétrasiloxane appelé TOMCATS et de formule (CH₃HSiO)₄, le tétraméthylsilane appelé TMS de formule Si(CH₃)₄ ou l'héxaméthyldisilazane appelé HMDSN de formule (CH₃)₃-SiNH-Si(CH₃)₃.

Le précurseur d'aluminium est quant à lui de préférence choisi de nature organo-métallique, ayant notamment une fonction alcoolate et/ou β-dicétone du type acétylacétonate d'aluminium, ou méthyle 2-heptadione 4,6 d'aluminium appelé encore isovalérylacétonate d'aluminium.

Le précurseur du troisième élément M peut en fait également être le précurseur de silicium et/ou celui de l'aluminium. Comme ces deux derniers précurseurs sont à radicaux hydrocarbonés, si l'on choisit le fluor comme élément M, il suffit en effet de substituer tout ou partie des atomes d'hydrogène de l'un et/ou de l'autre de ces précurseurs par des atomes de fluor. On peut ainsi avantageusement utiliser un précurseur d'aluminium sous la forme d'un acétylacétonate hexafluoré, ou d'un trifluoroacéthylacétonate d'aluminium.

On peut cependant préférer introduire cet élément M dans la couche par le biais d'un précurseur indépendant de celui du silicium ou de l'aluminium, notamment sous la forme d'un gaz fluoré du type CF₄ quand il s'agit du fluor.

La couche peut contenir également des traces de carbone, pour lequel il est usuellement inutile de prévoir un précurseur qui lui est propre, le carbone pouvant provenir notamment du précurseur de silicium ou d'aluminium possédant des groupes carbonés.

Suivant les conditions de dépôt, l'atmosphère dans laquelle il est effectué, il peut être nécessaire d'ajouter un précurseur contenant de l'oxygène pour former un oxyde, précurseur qui peut être l'oxygène pur O₂, ou un gaz oxydant plus 〈〈 doux 〉〉 du type H₂O, CO₂, N₂O ou plus 〈〈 fort 〉〉 tel que l'ozone O₃.

La température de dépôt est corrélée au choix des précurseurs. Elle est de préférence comprise entre 400 et 650°C, de préférence entre 450 et 550°C, notamment entre 480 et 520°C. On peut alors déposer la couche en continu sur un ruban de verre d'une installation de fabrication de verre plat dit 〈〈float 〉〉, et notamment à la sortie du bain float, par exemple dans l'étenderie où la température du ruban de verre est comprise dans la gamme des températures précitée. En déposant ainsi la couche selon l'invention relativement en 〈〈 aval 〉〉 de la ligne float, on peut très avantageusement déposer avant elle d'autres couches minces, également par pyrolyse, en phase solide, liquide ou gazeuse. On fabrique ainsi la totalité de l'empilement de couches en continu sur le ruban, ce qui est économiquement très intéressant.

L'invention permet ainsi la fabrication de vitrages de contrôle solaire filtrants, avec des empilements du type :

verre/TiN/oxyde mixte

l'oxyde mixte de l'invention permettant d'une part de diminuer l'aspect réfléchissant du substrat 〈〈 côté couches 〉〉, et d'autre part de protéger la couche de TiN susceptible de détérioration et notamment d'oxydation, tout particulièrement dans le cas où le verre est ensuite soumis à un traitement thermique du type recuit, bombage ou trempe.

L'oxyde mixte de l'invention peut aussi être associé à des couches bas-émissives, avec des empilements du type :

verre/SiOC/SnO₂:F/oxyde mixte

Dans ce cas, la couche de SnO₂:F étant intrinsèquement durable, l'oxyde mixte de l'invention aura surtout un rôle optique en combinaison avec la couche de SiOC qui se trouve sous celle en SnO₂:F. L'oxyde mixte de l'invention peut aussi se trouver dans un empilement type anti-réfléchissant avec une ou plusieurs séquences oxyde (bas indice)/oxyde (haut indice), la couche mixte selon l'invention à bas indice constituant au moins la dernière couche.

L'invention donne la possibilité de fabriquer tout type de vitrages fonctionnels à couches minces qui sont de grande durabilité et qui, en résistant à l'oxydation à haute température, sont également trempables et/ou bombables quand on utilise des substrats verriers.

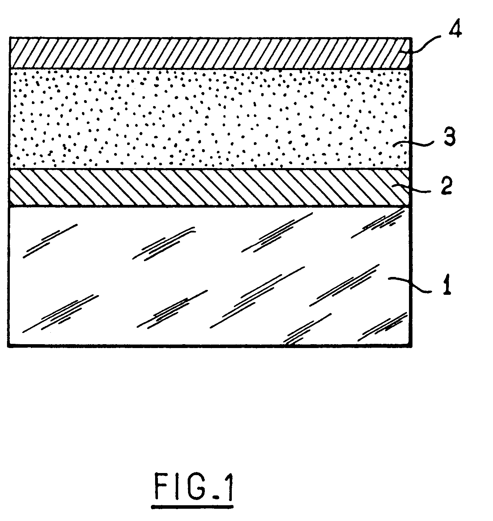

Les détails et caractéristiques avantageuses de l'invention ressortent de la description suivante d'exemples de réalisation non limitatifs à l'aide de la figure 1 annexée. Cette figure ne respecte pas les proportions concernant les épaisseurs relatives des différents matériaux, pour plus de clarté. Ces exemples concernent la fabrication de vitrages bas-émissifs, utilisant des substrats 1 de verre silico-sodo-calcique clair de 6 millimètres d'épaisseur que l'on recouvre de trois couches successivement : une première couche dite 〈〈 sous-couche 2 〉〉 en SiOC obtenue par pyrolyse en phase gazeuse de silane et d'éthylène comme décrit dans la demande de brevet EP-0 518 755 ; une seconde couche dite couche 〈〈 fonctionnelle 〉〉 basse-émissive 3 de SnO₂:F obtenue de manière connue par pyrolyse de poudre à partir de difluorure de dibutylétain, et une troisième couche dite 〈〈 surcouche 4〉〉 qui est celle mise au point par l'invention. Ce type d'empilement à trois couches est celui décrit dans les demandes de brevet français FR-2 704 543 et européen EP-0 544 577 auxquelles on se rapportera pour plus de détails.

Dans tous les exemples, la sous-couche en SiOC a une épaisseur géométrique de 55 nanomètres et un indice de réfraction d'environ 1,75, et la couche fonctionnelle en SnO₂:F a une épaisseur géométrique de 360 nanomètres et un indice de réfraction d'environ 1,9 à 2.

### EXEMPLES COMPARATIFS 1 A 3 :

L'exemple comparatif utilise une surcouche 4 en SiO₂ de 90 ± 5 nanomètres et d'indice 1,45 obtenue par pyrolyse en phase gazeuse à partir de TEOS (tétraéthylorthosilicate) à une température de 500°C.

L'exemple comparatif 2 utilise une surcouche 4 en Al₂O₃, obtenue par pyrolyse de tri-isopropylate d'aluminium à une température de 500°C comme décrit dans la demande EP-0 500 445, d'une épaisseur d'environ 95 nanomètres et d'un indice de réfraction de 1,60 .

L'exemple comparatif 3 utilise une surcouche 4 en SiO₂ contenant des traces de fluor, de 88 ± 5 nanomètres et d'indice 1,44, obtenue par pyrolyse en phase gazeuse à partir de TEOS et de CF₄ à 500°C.

### EXEMPLES 4 A 10 :

Ce sont les exemples selon l'invention, où la surcouche selon l'invention est obtenue par pyrolyse en phase gazeuse d'un mélange d'hexafluoroacétylacétonate d'aluminium, de tétraéthylorthosilicate TEOS et d'oxygène, à une température de dépôt comprise entre 480 et 520°C. On module empiriquement la proportion en volume entre TEOS et l'acétylacétonate hexafluoré à une valeur comprise entre 1 et 7 d'une part, entre oxygène et TEOS à une valeur comprise entre 2 et 7 d'autre part. On module également la température de dépôt dans la gamme précitée. On obtient alors des surcouches 4 de formule SiAlₓO_{y}F_{z} Cᵤ d'épaisseur géométrique 90 ± 5 nanomètres et d'indice de réfraction variable.

Le tableau 1 ci-dessous regroupe pour chacun des exemples l'indice de réfraction i.r. de la surcouche 4 et les coefficients x, y, z, u qui s'y rapportent.

**TABLEAU 1**

| | **x (Al)** | **y (O)** | **z (F)** | **u (C)** | **i.r.** |
|---|---|---|---|---|---|
| Exemple 4 | 0.06 | 2.09 | 0.01 | 0.01 | 1,45 |
| Exemple 5 | 0.07 | 2.11 | 0.02 | 0.01 | 1,45 |
| Exemple 6 | 0.14 | 2.21 | 0.01 | 0.03 | 1,47 |
| Exemple 7 | 0.27 | 2.40 | 0.04 | 0.04 | 1,48 |
| Exemple 8 | 0.29 | 2.43 | 0.04 | 0.03 | 1,49 |
| Exemple 9 | 0.33 | 2.50 | 0.05 | 0.04 | 1,49 |
| Exemple 10 | 0.74 | 3.11 | 0.15 | 0.12 | 1,54 |

Le tableau 2 ci-dessous regroupe les valeurs spectrophotométriques suivantes pour certains de ces exemples : la transmission lumineuse T_{L} en pourcentage, la réflexion lumineuse R_{L} en pourcentage, la longueur d'onde dominante λ dom(R) en réflexion en nanomètres et la pureté de couleur en réflexion p(r) en pourcentage, valeurs mesurées selon l'illuminant D₆₅.

**TABLEAU 2**

| | T_{L} | R_{L} | λ dom (R) | p (r) |
|---|---|---|---|---|
| Exemple comparatif 1 | 82,5 | 5,5 | 489 | 10 |
| Exemple comparatif 2 | 77 | 11 | 634 | 11 |
| Exemple comparatif 3 | 77,4 | 10,6 | 590 | 20 |
| Exemple 7 | 82 | 6 | 490 | 2,7 |

On constate que les surcouches 4 des exemples 4 à 10 selon l'invention, prises isolément, sont isolantes sur le plan électrique, très lisses puisque présentant une rugosité d'au plus 10 Angströms (moyenne des distances pic-vallée à la surface de la couche mesurée par microscopie à force atomique). Les surcouches de l'invention présentent en outre une légère hydrophobie, avec un angle de contact de l'eau à leur surface compris entre 42 et 60°, avec notamment un angle de contact de 52° pour la surcouche de l'exemple 8.

Par comparaison, l'angle de contact de l'eau à la surface de la surcouche en SiO₂ selon l'exemple comparatif 1 est de 30°.

Sur chacun des substrats recouverts selon les exemples 1 à 10 ont été effectués deux tests :
Le premier permet d'évaluer la durabilité chimique de l'empilement et s'appelle le test du brouillard salin neutre. Il est décrit dans la norme ISO 9227, et consiste à plonger le substrat dans un brouillard salin neutre à partir de sel de Nacl à 50g/l à une température de 35°C et un pH de 6.5 à 7.2 jusqu'au moment où apparaissent les premiers défauts détectables. Les couches minces sont considérées comme ayant réussi le test si elles résistent au moins 480 heures, soit 20 jours. Tous les substrats des exemples 4 à 10 selon l'invention résistent plus de 21 jours sans présenter de défaut visible à l'oeil qui seraient dus à des détériorations dans l'empilement.

Il a été constaté qu'au delà de 21 jours, les surcouches de l'invention qui résistaient le plus longtemps étaient celles dont la composition chimique contenait de l'aluminium avec une valeur de x supérieure à 0,15. Ainsi, si l'on prend l'exemple 7, au bout de 28 jours, la valeur de R_{L} n'a augmenté que de 0,6% pour passer à 6,6%. La valeur de λ dom(R) est passée à 492 nm, on reste donc tout-à-fait dans une même tonalité bleu-vert en réflexion, couleur qui reste très atténuée puisque la pureté p(r) ne gagne que 0,1% pour passer à 2,8.

Les résultats à ce test sont très différents pour les trois exemples comparatifs. Ainsi, la surcouche 4 en SiO₂ selon l'exemple comparatif 1 se détériore très vite : elle est attaquée dès le 7ème jour et il n'en reste que des traces au bout de 14 jours. Cette lixiviation se traduit par une modification radicale de l'aspect en réflexion 〈〈 côté couches 〉〉 du substrat. Au 14ème jour, la valeur de R_{L} a plus que doublé pour passer à 11%, la valeur de λ dom(R) est passée à 617 nanomètres et la pureté p(r) à 12%. Le substrat a un aspect plus brillant en réflexion, sa coloration est devenue pourpre, et plus intense de surcroît. La surcouche, détruite, ne remplit ainsi plus sa fonction optique.

Concernant l'exemple comparatif 2, la surcouche d'Al₂O₃ est attaquée au bout du 14ème jour, période à l'issue de laquelle l'aspect en réflexion du substrat subit également des changements : la valeur de R_{L} passe à 15% ; la λ dom(R) à 544 nm et la pureté p(r) à 19%. Le substrat devient donc plus 〈〈 brillant 〉〉 en réflexion avec une couleur nettement plus intense puisque la pureté a presque doublé.

Concernant l'exemple comparatif 3, la surcouche en SiO₂ contenant du fluor est attaquée dès le 7ème jour, les résultats étant similaires à ceux obtenus pour l'exemple comparatif 1.
Le second test est parfois appelé test 〈〈 Taber 〉〉 et permet d'évaluer la résistance mécanique de l'empilement. Ce test est effectué à l'aide de meules faites de poudre abrasive noyée dans un élastomère. La machine est fabriquée par la société TABER INSTRUMENT CORPORATION. Il s'agit du modèle 174 〈〈 Standard Abrasion Tester 〉〉, les meules sont de type CSIOF chargées de 500 grammes. Chaque substrat est soumis localement à 2000 rotations, on mesure alors la transmission lumineuse T_{L} de la zone soumise à l'abrasion à 550 nm avant (T_{Lo}) et après (T_{L2000}) abrasion, ainsi que sa saturation C* en réflexion avant (C*o) et après (C*₂₀₀₀) abrasion. La saturation C* est, dans le système de colorimétrie (L, a*, b*), la valeur égale à (a^{*2} + b^{*2})^{1/2} et permet d'évaluer l'intensité de la coloration en réflexion dans ce système.

L'ensemble des exemples 4 à 10 selon l'invention montre que la variation de T_{L} égale à (T_{L2000} - T_{Lo}) est d'au plus 3%, et la variation de saturation (C*₂₀₀₀ - C*ₒ) est d'au plus 8. Ces variations dénotent une détérioration peu importante et révèlent donc une résistance des surcouches de l'invention à la rayure au moins aussi bonne que celle des surcouches en SiO₂ pur selon l'exemple comparatif 1.

On peut noter par ailleurs qu'essayer de déposer par pyrolyse une couche d'oxyde mixte Si, Al dépourvu de tout additif du type fluor, (par exemple en utilisant un précurseur d'aluminium dont les hydrogènes ne sont pas substitués) aboutit à la fabrication d'une couche très inhomogène avec deux 〈〈 strates 〉〉, l'une en SiO₂, l'autre en Al₂O₃ avec une interface diffuse, couche ne présentant aucune des propriétés de la couche selon l'invention qui contient du fluor, notamment en ce qui concerne la durabilité chimique et mécanique.

En conclusion, on voit que les couches 〈〈 mixtes 〉〉 selon l'invention résistent bien à l'abrasion mécanique et aux attaques chimiques, ce qui n'est pas le cas des couches en Al₂O₃ ou en SiO₂, même additionnées de fluor.

Il y a donc bien un effet de synergie avantageux dans la combinaison des différents éléments des couches de l'invention. On peut, bien sûr, ensuite jouer sur les proportions relatives de chacun de ces éléments pour optimiser une caractéristique donnée. Ainsi, plus d'aluminium va permettre d'augmenter l'indice de réfraction. Concernant la durabilité chimique, on a déjà mentionné que choisir une valeur de x de plus de 0,15 était favorable. On peut aussi prendre en compte la vitesse de dépôt, on a ainsi remarqué notamment que les surcouches selon les exemples 8 et 9 se déposaient à une vitesse supérieure aux autres.

La co-déposition par pyrolyse en phase gazeuse paraît imposer, pour garantir ces propriétés, la présence d'un additif du type fluor.

L'oxyde mixte de l'invention présente l'avantage subsidiaire de se déposer par pyrolyse beaucoup plus vite que de la silice pure, environ au moins 10 fois plus vite à conditions de dépôt comparables.

Sa température de dépôt permet d'envisager sans problème des empilements tri-couches en ligne sur le ruban de verre float, avec par exemple la sous-couche de SiOC dans le bain float par pyrolyse gazeuse, la couche fonctionnelle dans ou en sortie du bain float et la surcouche selon l'invention dans l'étenderie, ou juste après la couche fonctionnelle pour la protéger tout de suite de l'oxydation quand elle est déposée dans un état de sous-stoéchiométrie en oxygène.

La couche de l'invention est donc particulièrement appropriée pour servir de 〈〈 dernière couche 〉〉 dans des empilements à couche fonctionnelle du type filtrante ou bas-émissive sur des vitrages, car elle peut remplir une fonction optique, notamment une fonction d'optimisation de l'aspect en réflexion, et ceci pendant très longtemps, vue sa durabilité. On peut ainsi garantir une constance dans le temps de l'aspect des vitrages.

L'utilisation de la couche selon l'invention en tant que dernière couche d'un empilement permet en outre, une fois la totalité de l'empilement déposé, de bomber ou tremper le substrat verrier porteur de l'empilement sans détérioration notable des propriétés de ce dernier, la couche faisant barrière à l'oxydation : notamment la transmission lumineuse T_{L} est maintenue constante.

Il va de soi, cependant, qu'elle peut également être utilisée avec profit dans une autre configuration dans des empilements de couches minces, notamment en tant que première couche de l'empilement pour une fonction 〈〈 d'accrochage 〉〉 et/ou de barrière aux alcalins.

Qu'il y ait ou non bombage/trempe du substrat, la couche de l'invention 〈〈 en surcouche 〉〉 autorise clairement le stockage de longue durée des substrats sans nécessiter d'emballage sophistiqué. Elle autorise également le montage des substrats en vitrage avec l'empilement de couches minces exposé à l'atmosphère, sans avoir à redouter les aggressions du type nettoyages ou pollution atmosphérique.

## Revendications

1. Produit comprenant un substrat transparent du type substrat (1) verrier recouvert d'au moins une couche mince (4) à base d'oxyde comprenant du silicium, caractérisé en ce que ladite couche mince comprend également, outre l'oxygène, de l'aluminium et au moins un troisième élément M facilitant la formation d'une structure d'oxyde mixte homogène en silicium et en aluminium.

2. Produit selon la revendication 1, caractérisé en ce que le troisième élément M de ladite couche à base d'oxyde est un halogène, de préférence du fluor F.

3. Produit selon l'une des revendications précédentes, caractérisé en ce que ladite couche mince à base d'oxyde comprend un quatrième élément M', notamment du carbone.

4. Produit selon l'une des revendications précédentes, caractérisé en ce que la formulation chimique de ladite couche mince à base d'oxyde est SiAlₓO_{y}M_{z}M'ᵤ, avec M représentant du fluor et M' du carbone dans les proportions suivantes :
| | | |
|---|---|---|
| x (Al): | de 0,06 à 0,74 | de préférence de 0,14 à 0,33 |
| y (O): | de 2,1 à 3,1 | de préférence de 2,3 à 2,5 |
| z (M): | de 0,02 à 0,15 | de préférence de 0,04 à 0,08 |
| u (M'): | de 0 à 0,15 | de préférence de 0,03 à 0,04 |

5. Produit selon l'une des revendications précédentes, caractérisé en ce que ladite couche mince à base d'oxyde présente une épaisseur géométrique 30 et 180 nanomètres, notamment entre 60 et 160 nanomètres, de préférence entre 80 et 140 nanomètres.

6. Produit selon l'une des revendications précédentes, caractérisé en ce que ladite couche mince à base d'oxyde présente un indice de réfraction comprise entre 1.42 et 1.60, de préférence entre 1.44 et 1.46.

7. Produit selon l'une des revendications précédentes, caractérisé en ce que ladite couche mince à base d'oxyde fait partie d'un empilement de couches minces, dont au moins une couche fonctionnelle (3) à propriétés thermiques, notamment filtrantes, sélectives, anti-solaires ou à bas-émissivité et/ou à propriétés électriques, du type oxyde métallique dopé ou nitrure/oxynitrure métallique.

8. Produit selon la revendication 7, caractérisé en ce que la couche fonctionnelle (3) est en oxyde d'étain dopé au fluor SnO₂:F, en oxyde d'indium dopé à l'étain ITO, en oxyde de zinc dopé à l'indium ZnO:In, au fluor ZnO:F, à l'aluminium ZnO:Al ou à l'étain ZnO:Sn ou encore en nitrure de titane TiN.

9. Produit selon l'une des revendications 1 à 6, caractérisé en ce que ladite couche mince à base d'oxyde fait partie d'un empilement de couches minces anti-réfléchissant comportant une alternance de couches d'oxydes à haut et bas indices de réfraction.

10. Produit selon l'une des revendications précédentes, caractérisé en ce que ladite couche mince à base d'oxydes (4) est la dernière couche de l'empilement (2, 3, 4), et remplit une fonction optique et/ou de protection de l'empilement vis-à-vis de l'oxydation à haute température ou de la corrosion chimique.

11. Produit selon l'une des revendications 1 à 9, caractérisé en ce que ladite couche mince à base d'oxyde(s) (4) est la première couche de l'empilement, et remplit notamment une fonction de barrière à la diffusion des ions alcalins ou de sous-couche d'accrochage vis-à-vis d'une couche de type hydrophobe/oléophobe.

12. Procédé d'obtention du produit selon l'une des revendications précédentes, caractérisé en ce qu'on effectue le dépôt de la couche mince à base d'oxyde (4) par une technique de pyrolyse en phase gazeuse à partir d'au moins deux précurseurs, dont un précurseur de silicium et un précurseur d'aluminium, en modulant leur proportion relative et la température de dépôt afin d'ajuster la formulation chimique et/ou l'indice de réfraction de ladite couche.

13. Procédé selon la revendication 12, caractérisé en ce que le précurseur de silicium est un précurseur organo-silicié, notamment choisi par le tétraéthylorthosilicate, TEOS, l'héxaméthyldisilane HMDS, l'héxaméthyldisiloxane HMDSO, l'octaméthylcyclotétrasiloxane OMCTS, le tétraméthylcyclotétrasiloxane TOMCATS, le tétraméthylsilane TMS ou l'héxaméthyldisilazane HMDSN.

14. Procédé selon la revendication 12 ou 13, caractérisé en ce que le précurseur d'aluminium est un précurseur organo-métallique, notamment à fonction alcoolate ou β-dicétone du type acétylacétonate d'aluminium ou méthyle 2-heptadione 4,6.

15. Procédé selon l'une des revendications 12 à 14, caractérisé en ce que le précurseur du troisième élément M est également le précurseur de l'aluminium et/ou le précurseur du silicium, notamment par substitution de tout ou partie des atomes d'hydrogène de l'un ou l'autre des précurseurs par des atomes d'halogène, quand M est un halogène, avec notamment un précurseur d'aluminium sous la forme d'un acétylacétonate hexafluoré ou d'un trifluoroacétonate.

16. Procédé selon l'une des revendication 12 à 14, caractérisé en ce que le précurseur du troisième élément M est indépendant des précurseurs de silicium et d'aluminium, et est notamment un gaz fluoré du type CF₄ dans le cas où M est du fluor.

17. Procédé selon l'une des revendications 12 à 16, caractérisé en ce que les précurseurs comportent également un précurseur gazeux de l'oxygène, du type O₂, H₂O, CO₂, N₂O ou O₃.

18. Procédé selon l'une des revendications 12 à 17, caractérisé en ce que la température de dépôt est choisie entre 400 et 650°C, de préférence entre 450 et 550°C.

19. Procédé selon l'une des revendications précédentes, caractérisé en ce qu'on effectue en phase gazeuse le dépôt de la couche mince (4) à base d'oxyde en continu sur un ruban de verre float, après l'enceinte de flottage et de préférence dans l'étenderie.

20. Procédé selon la revendication 18, caractérisé en ce que le dépôt de la couche mince à base d'oxyde (4) sur le ruban de verre float est précédé par le dépôt d'une ou plusieurs autres couches minces (2, 3), également par une technique de pyrolyse, par voie solide, liquide ou gazeuse.

21. Application du produit selon l'une des revendications 1 à 11 ou du procédé selon l'une des revendications 12 à 20 à la fabrication de vitrages munis de couches minces, de contrôle solaire du type filtrants ou bas-émissifs ou anti-réfléchissants.

22. Application selon la revendication 21 à la fabrication de vitrages munis de couches minces trempables/bombables et/ou de grande durabilité chimique.

## Claims

1. Product comprising a transparent substrate of the glass substrate (1) type covered with at least one oxide-based film (4) incorporating silicon, characterized in that said film also comprises, apart from oxygen, aluminium and at least one third element M facilitating the formation of a homogeneous, mixed oxide structure of silicon and aluminium.

2. Product according to claim 1, characterized in that the third element M of said oxide-based film is a halogen, preferably fluorine F.

3. Product according to one of the preceding claims, characterized in that said oxide-based film comprises a fourth element M', particularly carbon.

4. Product according to one of the preceding claims, characterized in that the chemical formulation of said oxide-based film is SiAlₓO_{y}M_{z}M'ᵤ, with M representing fluorine and M' carbon in the following proportions:
| | |
|---|---|
| x(Al) : | 0.06 to 0.74, preferably 0.14 to 0.33 |
| y(O) : | 2.1 to 3.1, preferably 2.3 to 2.5 |
| z(M) : | 0.02 to 0.15, preferably 0.04 to 0.08 |
| u(M') : | 0 to 0.15, preferably 0.03 to 0.04 |

5. Product according to one of the preceding claims, characterized in that said oxide-based film has a geometrical thickness of 30 to 180 nanometres, particularly 60 to 160 nanometres and preferably 80 to 140 nanometres.

6. Product according to one of the preceding claims, characterized in that said oxide-based film has a refractive index between 1.42 and 1.60, preferably between 1.44 and 1.46.

7. Product according to one of the preceding claims, characterized in that said oxide-based film forms part of a stack of films, including at least one functional film (3) having thermal, particularly filtering, selective, sun shielding or low emissivity and/or electrical properties, of the doped metal oxide or nitride/metallic oxynitride type.

8. Product according to claim 7, characterized in that the functional film (3) is of fluorine-doped tin oxide SnO₂:F, tin-doped indium oxide ITO, indium-doped zinc oxide ZnO:In, fluorine-doped zinc oxide ZnO:F, aluminium-doped zinc oxide ZnO:Al, tin-doped zinc oxide ZnO:Sn or titanium nitride TiN.

9. Product according to one of the claims 1 to 6, characterized in that said oxide-based film forms part of a stack of non-reflecting films comprising an alternation of high and low refractive index oxide films.

10. Product according to one of the preceding claims, characterized in that said oxide-based film (4) is the last film of the stack (2, 3, 4) and fulfils an optical and/or protective function for the stack with respect to high temperature oxidation or chemical corrosion.

11. Product according to one of the claims 1 to 9, characterized in that said oxide-based film is the first film of the stack and in particular fulfils a diffusion barrier function for the alkali ions or an attachment subfilm function with respect to a hydrophobic/oleophobic film.

12. Process for obtaining a product according to one of the preceding claims, characterized in that the deposition of the oxide-based film (4) takes place by a gas phase pyrolysis procedure from at least two precursors, including a silicon precursor and an aluminium precursor, by modulating their relative proportion and deposition temperature in order to adjust the chemical formulation and/or refractive index of said film.

13. Process according to claim 12, characterized in that the silicon precursor is an organosilicon precursor, particularly chosen from among tetraethyl orthosilicate TEOS, hexamethyl disilane HMDS, hexamethyl disiloxane HMDSO, octamethyl cyclotetrasiloxane OMCTS, tetramethyl cyclotetrasiloxane TOMCATS, tetramethyl silane TMS or hexamethyl disilazane HMDSN.

14. Process according to claim 12 or 13, characterized in that the aluminium precursor is an organometallic precursor, particularly having an alkoxide or β-diketone function of the aluminium acetyl acetonate or 2-methyl-4,6-heptadione type.

15. Process according to one of the claims 12 to 14, characterized in that the precursor of the third element M is also the aluminium precursor and/or silicon precursor, particularly by substitution of all or part of the hydrogen atoms of one or other of the precursors by halogen atoms, when M is a halogen, with in particular an aluminium precursor in the form of hexafluoroacetyl acetonate or trifluoroacetonate.

16. Process according to one of the claims 12 to 14, characterized in that the precursor of the third element M is independent of the silicon and aluminium precursors and is in particular a fluorine gas of the CF₄ type in the case where M is fluorine.

17. Process according to one of the claims 12 to 16, characterized in that the precursors also include a gaseous precursor of oxygen of the type O₂, H₂O, CO₂, N₂O or O₃.

18. Process according to one of the claims 12 to 17, characterized in that the deposition temperature is chosen between 400 and 650°C, preferably between 450 and 550°C.

19. Process according to one of the preceding claims, characterized in that the oxide-based film (4) is deposited continuously in the gaseous phase on a float glass ribbon, following the float enclosure and preferably in the lehr.

20. Process according to claim 18, characterized in that the deposition of the oxide-based film (5) on the float glass ribbon is preceded by the deposition of one or more other films (2, 3), also by solid, liquid or gas pyrolysis.

21. Application of the product according to one of the claims 1 to 11 or the process according to one of the claims 12 to 20 to the manufacture of glazings equipped with sun-control films of the filtering or low emissive or anti-reflecting type.

22. Application according to claim 21 to the manufacture of glazings provided with temperable/bendable and/or high chemical durability films.

## Patentansprüche

1. Erzeugnis, umfassend ein transparentes Substrat wie ein Glassubstrat (1), das mit mindestens einer dünnen Schicht (4) auf der Basis eines Silicium enthaltenden Oxids überzogen ist, **dadurch gekennzeichnet, daß** die dünne Schicht auch, außer Sauerstoff, Aluminium und wenigstens ein drittes Element M enthält, das die Bildung einer in bezug auf Silicium und Aluminium homogenen Mischoxidstruktur erleichtert.

2. Erzeugnis nach Anspruch 1, **dadurch gekennzeichnet, daß** das dritte Element M der Schicht auf Oxidbasis ein Halogen und vorzugsweise Fluor F ist.

3. Erzeugnis nach einem der vorhergehenden Ansprüche, **dadurch gekennzeichnet, daß** die dünne Schicht auf Oxidbasis ein viertes Element M', insbesondere Kohlenstoff, enthält.

4. Erzeugnis nach einem der vorhergehenden Ansprüche, **dadurch gekennzeichnet, daß** die chemische Formel der dünnen Schicht auf Oxidbasis SiAlₓO_{y}M_{z}M'ᵤ, wobei M Fluor und M' Kohlenstoff bedeutet, mit folgenden Anteilen ist:
| | | |
|---|---|---|
| x(Al): | von 0,06 bis 0,74 | und vorzugsweise 0,14 bis 0,33, |
| y(O): | von 2,1 bis 3,1 | und vorzugsweise 2,3 bis 2,5, |
| z(M): | von 0,02 bis 0,15 | und vorzugsweise 0,04 bis 0,08, |
| u(M'): | von 0 bis 0,15 | und vorzugsweise 0,03 bis 0,04. |

5. Erzeugnis nach einem der vorhergehenden Ansprüche**, dadurch gekennzeichnet, daß** die dünne Schicht auf Oxidbasis eine geometrische Dicke zwischen 30 und 180 Nanometern, insbesondere zwischen 60 und 160 Nanometern und vorzugsweise zwischen 80 und 140 Nanometern besitzt.

6. Erzeugnis nach einem der vorhergehenden Ansprüche, **dadurch gekennzeichnet, daß** die dünne Schicht auf Oxidbasis einen Brechungsindex zwischen 1,42 und 1,60 und vorzugsweise zwischen 1,44 und 1,46 besitzt.

7. Erzeugnis nach einem der vorhergehenden Ansprüche, **dadurch gekennzeichnet, daß** die dünne Schicht auf Oxidbasis Teil eines Aufbaus aus dünnen Schichten ist, wovon mindestens eine Funktionsschicht (3) mit thermischen, insbesondere filternden, selektiven und vor Sonne schützenden Eigenschaften oder mit niedrig emittierenden und/oder elektrischen Eigenschaften vom Typ eines dotierten Metalloxids oder eines Metallnitrids/Metallnitridoxids ist.

8. Erzeugnis nach Anspruch 7, **dadurch gekennzeichnet, daß** die Funktionsschicht (3) aus mit Fluor dotiertem Zinnoxid, SnO₂:F, mit Zinn dotiertem Indiumoxid, ITO, mit Indium, ZnO:In, Fluor, ZnO:F, Aluminium, ZnO:Al oder Zinn, ZnO:Sn, dotiertem Zinkoxid oder auch aus Titannitrid, TiN, besteht.

9. Erzeugnis nach einem der Ansprüche 1 bis 6, **dadurch gekennzeichnet, daß** die dünne Schicht auf Oxidbasis Teil eines Antireflexaufbaus aus dünnen Schichten ist, welcher abwechselnd Oxidschichten mit großem und kleinem Brechungs-index umfaßt.

10. Erzeugnis nach einem der vorhergehenden Ansprüche, **dadurch gekennzeichnet, daß** die dünne Schicht (4) auf der Basis von Oxiden die letzte Schicht des Aufbaus (2, 3, 4) ist und in diesem eine optische und/oder Schutzfunktion vor Oxidation bei hoher Temperatur oder vor chemischer Korrosion erfüllt.

11. Erzeugnis nach einem der Ansprüche 1 bis 9, **dadurch gekennzeichnet, daß** die dünne Schicht (4) auf der Basis von Oxid/en die erste Schicht des Aufbaus ist und insbesondere die Funktion einer Barriere gegen die Diffusion von Alkali-metallionen oder einer Haftschicht für eine hydrophobe/oleophobe Schicht erfüllt.

12. Verfahren zur Herstellung des Erzeugnisses nach einem der vorhergehenden Ansprüche**, dadurch gekennzeichnet, daß** die dünne Schicht (4) auf Oxidbasis durch ein Pyrolyseverfahren in der Gasphase aus mindestens zwei Vorläufern, einem Siliciumvorläufer und einem Aluminiumvorläufer, aufgebracht wird, wobei deren Verhältnis zueinander und die Abscheidetemperatur beeinflußt werden, um die chemische Formel und/oder den Brechungsindex dieser Schicht einzustellen.

13. Verfahren nach Anspruch 12, **dadurch gekennzeichnet, daß** der Siliciumvorläufer ein siliciumorganischer Vorläufer ist und insbesondere aus Tetraethylorthosilicat, TEOS, Hexamethyldisilan, HMDS, Hexamethyldisiloxan, HMDSO, Octamethylcyclotetrasiloxan, OMCTS, Tetramethylcyclotetrasiloxan, TOMCATS, Tetramethylsilan, TMS, oder Hexamethyldisilazan, HMDSN, ausgewählt ist.

14. Verfahren nach Anspruch 12 oder 13, **dadurch gekennzeichnet, daß** der Aluminiumvorläufer ein metallorganischer Vorläufer, insbesondere mit Alkoholat- oder β-Diketon-Funktion vom Typ Aluminiumacetylacetonat oder Aluminium-2-methyl-4,6-heptadion, ist.

15. Verfahren nach einem der Ansprüche 12 bis 14, **dadurch gekennzeichnet, daß** der Vorläufer des dritten Elements M ebenfalls der Aluminium- und/oder der Siliciumvorläufer, insbesondere durch vollständige oder teilweise Substitution der Wasserstoffatome des einen oder anderen Vorläufers durch Halogenatome, wenn M ein Halogen bedeutet, mit speziell einem Aluminiumvorläufer in Form eines hexafluorierten Acetylacetonates oder eines Trifluoracetonats ist.

16. Verfahren nach einem der Ansprüche 12 bis 14**, dadurch gekennzeichnet, daß** der Vorläufer des dritten Elements M unabhängig vom Silicium- und vom Aluminiumvorläufer und insbesondere ein fluoriertes Gas wie CF₄ ist, wenn M Fluor bedeutet.

17. Verfahren nach einem der Ansprüche 12 bis 16, **dadurch gekennzeichnet, daß** die Vorläufer auch einen gasförmigen Vorläufer des Sauerstoffs wie O₂, H₂O, CO₂, N₂O oder O₃ umfassen.

18. Verfahren nach einem der Ansprüche 12 bis 17, **dadurch gekennzeichnet,** die Abscheidetemperatur von 400 bis 650 °C und vorzugsweise von 450 bis 550 °C gewählt wird.

19. Verfahren nach einem der vorhergehenden Ansprüche, **dadurch gekennzeichnet, daß** die dünne Schicht (4) auf Oxidbasis in einer Gasphase nach dem Floatbehälter und vorzugsweise im Rollenkühlofen kontinuierlich aufgebracht wird.

20. Verfahren nach Anspruch 18, **dadurch gekennzeichnet, daß** auf dem Floatglasband vor dem Abscheiden der dünnen Schicht (4) auf Oxidbasis, ebenfalls durch ein Pyrolyseverfahren, auf festem, flüssigem oder gasförmigem Wege eine oder mehrere andere dünne Schichten (2, 3) aufgebracht werden.

21. Verwendung des Erzeugnisses nach einem der Ansprüche 1 bis 11 oder des Verfahrens nach einem der Ansprüche 12 bis 20 zur Herstellung von Verglasungen mit Steuerung der Sonneneinstrahlung, welche mit filternden, niedrig emittierenden oder die Reflexion verhindernden dünnen Schichten versehen sind.

22. Verwendung nach Anspruch 21 zur Herstellung von mit dünnen Schichten versehenen Verglasungen, die vorgespannt/gebogen werden können und/oder große chemische Beständigkeit besitzen.
